# EUROPÄISCHE PATENTANMELDUNG

(11) **EP 0 629 966 A1**
(43) Veröffentlichungstag der Anmeldung: **21.12.1994**
(21) Anmeldenummer: 94108208.3
(22) Anmeldetag: 28.05.1994
(51) Int. Cl.: G06F 15/74, G06F 3/06, G06F 11/26

(54) **Digitale Hochgeschwindigkeits-Datenaufzeichnung mittels Standard-Computerperipheriegeräten**

(30) Priorität: 07.06.1993 DE 4318814
(71) Anmelder: DORNIER GmbH, D-88039 Friedrichshafen (DE)
(72) Erfinder: Schotter, Roland, Dr., D-88690 Uhldingen (DE); Späth, Hans Peter, E-Ing., D-88255 Baindt (DE)
(74) Vertreter: Landsmann, Ralf, Dipl.-Ing.

(57) **Zusammenfassung**

Verfahren zur Echtzeit-Speicherung und -Wiedergabe von analogen und digitalen externen Signalen mittels Parallelisierung von Standard-Computerspeicherperipheriegeräten (6). Die externen Signale werden über einen skalierbaren Datenbus (4) an die parallelisierten Speichereinheiten (6) zur Speicherung übergeben. Für die Aufzeichnung der externen Signale in den Speichereinheiten (6) werden ausschließlich lineare (sequentielle physikalische) Adressierung benutzt. Bei der Wiedergabe können die Signale in der ursprünglichen Form oder in einem anderen Format und mit beliebiger Geschwindigkeit ausgegeben werden. Das Gerät kann entweder über eine lokale Konsole (9) oder über eine Standard-Computerschnittstelle (z.B. RS232C oder IEEE) (10) von extern gesteuert werden, und bietet zudem die Möglichkeit, die aufgezeichneten Signale mittels eines SCSI-Hostadapters (3) in Nichtechtzeit an einen beliebigen Host-Computer zwecks Weiterverarbeitung zu übertragen.

## Beschreibung

Die Erfindung betrifft ein Verfahren und Gerät zur digitalen Datenaufzeichnung und Wiedergabe, bei welchem zwar Standard-Computerperipheriegeräte als Speichereinheiten wie z.B. Festplatten, RAM-Disks, optische Platten und Bandlaufwerke verwendet werden, jedoch durch den Einsam einer anderen, flexiblen Ansteuerung dieser Peripheriegeräte die Nachteile von üblichen Computerarchitekturen (begrenzte Busbandbreite, Mehrfachnutzung des Busses für den Datentransfer von der Datenquelle zur Speichereinheit über das RAM, Realisierung des Transfers unter Mitwirkung einer software-gesteuerten CPU bzw. eines DMA-Controllers) vermieden werden.

Die Erfindung zielt darauf ab, z.B. analoge Aufzeichnungsgeräte wie High Density Digital Recorder (HDDR) durch das zuverlässigere, flexiblere und kostengünstigere erfindungsgemäße Gerät zu ersetzen oder neue Aufzeichnungsmöglichkeiten zu schaffen, für die es bis jetzt keine entsprechenden Recorder gab, indem die erwähnten Standard-Computerperipheriegeräte als Speichereinheiten so eingesetzt werden, daß durch eine variable Parallelisierung dieser Speichereinheiten die für eine bestimmte Anwendung notwendige Datenrate und Datenspeicherkapazität erreicht wird. Aufgrund seiner Konzeption eignet sich das erfindungsgemäße Gerät vor allem für Eingangs-und/oder Ausgangsdatenraten von mehr als 10 MByte pro Sekunde.

Da die Lesegeschwindigkeit frei wählbar ist, können auch Zeitlupen-Darstellungen bei der Wiedergabe gewählt werden. Ebenso ist es möglich, langsame Ereignisse bei der Wiedergabe zu beschleunigen (Zeitraffer-Darstellungen). Ein Sonderfall der letzteren Betriebsart sind Echtzeit-Datengeneratoren, bei welchen digitale Testmuster softwaremäßig berechnet werden und anschließend mit wesentlich höherer Geschwindigkeit ausgelesen werden. Digitale Speicheroszillographen und Logikanalysatoren für längere Aufzeichnungsdauern fallen mit der entsprechenden Eingangs-und Ausgangs-Schnittstellenauslegung ebenfalls in den Anwendungsbereich des erfindungsgemäßen Geräts.

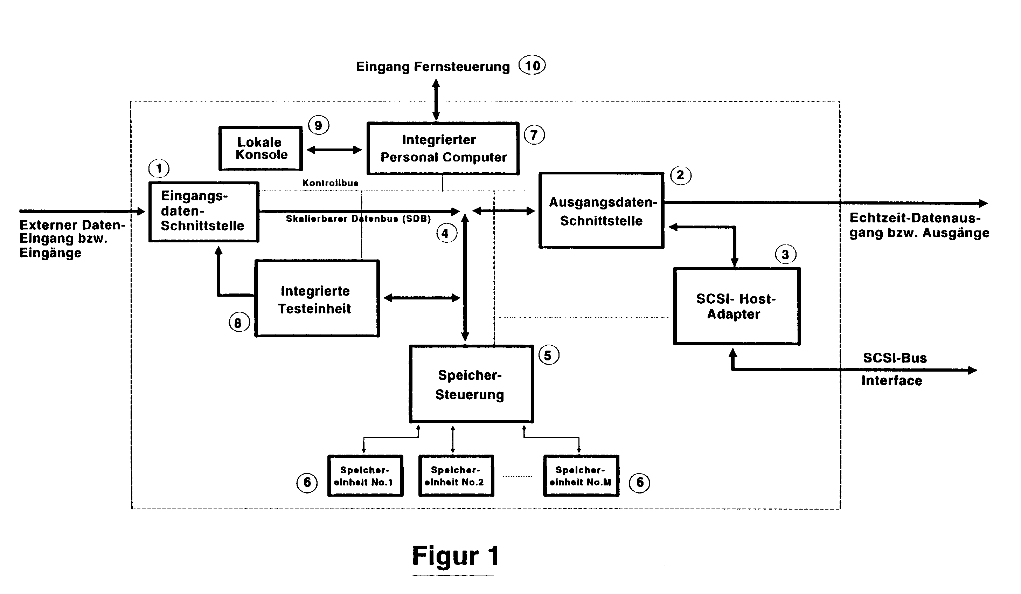

Das erfindungsgemäße Gerät (siehe Fig. 1) besitzt eine modulare Eingangsdaten-Schnittstelle (1), die je nach Ausführungsform mit verschiedenartigen analogen oder digitalen externen Datenquellen (z.B. Telemetriedaten, Videodaten, digitale Logikdaten, allgemeine Sensordaten) verbunden werden kann.

Ebenso besitzt das Gerät eine entsprechende modulare Ausgangsdaten-Schnittstelle (2), an welcher die aufgezeichneten Eingangsdaten in ihrer ursprünglichen Form und Datenrate bzw. langsamer oder schneller nach außen abgegeben werden können. Während der Aufzeichnung der Eingangsdaten stehen diese Daten an der Ausgangsdaten-Schnittstelle (2) in Echtzeit ebenfalls zur Verfügung (online Monitoring).

Das Gerät kann in seinen Aufnähme- und Wiedergabefunktionen entweder über eine Lokale Konsole (9) oder über eine Standard-Computerschnittstelle (z.B. RS 232C oder IEEE) (10) von extern gesteuert werden. Zusätzlich bietet das Gerät die Möglichkeit, die aufgezeichneten digitalen Daten mittels eines SCSI-Hostadapters (3) mit paralleler SCSI-Schnittstelle in Nichtechtzeit an einen beliebigen Host-Computer mit dieser Schnittstelle zu übertragen, falls eine Weiterverarbeitung der Daten für bestimmte Aufgaben in einem solchen Computer notwendig ist. Darüber hinaus können an dieser SCSI-Schnittstelle entsprechende Backup-Geräte für die aufgezeichneten Daten angeschlossen werden, wenn die im Gerät eingesetzten primären Speichereinheiten (6) (z.B. Festplatten oder RAM-Disks) nicht archivfähig sind. In diesem Fall übernimmt das erfindungsgemäße Gerät die Rolle des Masters auf dem SCSI-Bus.

Der SCSI-Hostadapter (3) ist zur Darstellung der Gesamtfünktionen des Geräts in Fig. 1 aufgenommen, er ist jedoch nur im Sinne dieser Gesamtfunktionen Gegenstand dieses Patents.

Ein weiterer Bestandteil des erfindungsgemäßen Geräts ist ein in der Datenbreite und Takfrequenz skalierbarer paralleler, bidirektionaler, synchroner reiner Datenbus (4), der aus
- alternativ 16,32,48,64,...usw. parallelen Datenleitungen mit kontinuierlicher Datenübertragung,
- einer Taktleitung,
- einem Wait-Signal zur Synchronisierung zwischen den Elementen Ausgangsdaten-Schnittstelle (2) und Speicher-Steuerung (5)
- und Steuersignalen zur Kennzeichnung gültiger Daten auf dem Bus
besteht. Mittels dieses Skalierbaren Datenbusses (SDB) (4) werden die externen Daten über die Eingangsdaten-Schnittstelle (1) und die Speicher-Steuerung (5) direkt an die Speichereinheiten (6) übertragen wobei die Datenbusbreite und Bustaktfrequenz jedes Anwendungsfalles so gewählt wird, daß alle Daten der externen Datenquelle(n) bei der maximal vorkommenden Datenrate und praktisch realisierbaren SDB-Taktfrequenzen (z.Zt. maximal 10 MHz) zu den Speichereinheiten (6) transferiert werden können.

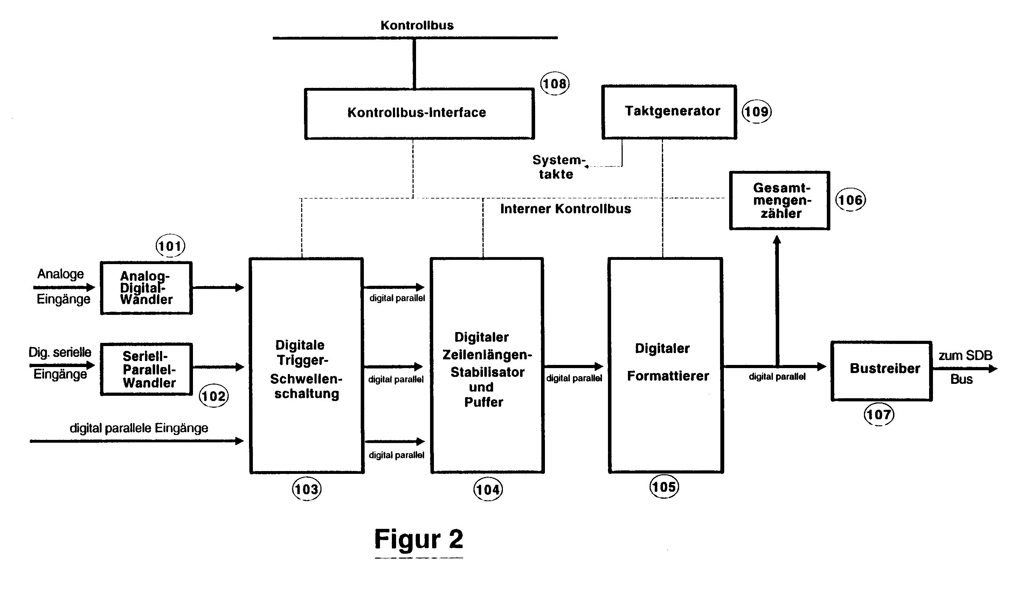

Die Umsetzung der externen Daten auf die Wortbreite und Taktfrequenz des SDB (siehe Fig. 2) einschließlich einer eventuell notwendigen AD-Wandlung (101) bzw. Seriell/Parallelwandlung (102) erfolgt in der Digitalen Formatierungseinheit (105) der Eingangsdaten-Schnittstelle (1) in der Weise, daß nach der Digitalisierung z.B. acht zeitlich aufeinanderfolgende 6 bit Daten einer einzelnen Datenquelle in ein 48 bit Datenwort des SDB's gepackt werden oder vier 8 bit Daten von vier parallelen Datenquellen zu einem 32 bit Wort des SDB kombiniert werden. Die für jede Anwendung optimale Aufbereitung der SDB-Datenworte wird in einem programmierbaren Baustein (z.B. GAL) realisiert und kann so leicht an die jeweiligen Bedürfnisse angepasst werden. Bei ungeeigneten Wortlängen der externen Eingangsdaten werden von der Eingangsdaten-Schnittstelle (1) Füllbits erzeugt, die das jeweils gewählte Wortformat des Skalierbaren Datenbusses (4) in effektiver Weise ergänzen. Bei der Wiedergabe werden diese Füllbits von der Ausgangsdaten-Schnittstelle (2) wieder entfernt.

Optional kann in einem selektierbaren Kanal eine Triggerschwelle gesetzt werden, mit welcher eine Triggerschaltung (103) den Datentransfer aller Kanäle zum SDB erst dann freigibt, wenn das gewählte Triggerwort zum erstenmal auftritt bzw. solange der Signalpegel über oder unter dem Triggerwert liegt. Alternativ kann bei Autreten des Triggerworts eine vorher gestartete Datenaufzeichnung beendet werden. In diesem Fall stehen alle vor dem Triggerereignis angefallenen Daten in den Speichereinheiten (6).

Die Eingangsdaten-Schnittstelle kann alternativ
- nulldimensionale Daten (z.B. serielle Telemetriedaten)
- eindimensionale Daten (z.B. eines Linescanners)
- zweidimensionale Daten (z.B. von Videokameras oder Bildscannern)
verarbeiten. In den beiden letzten Fällen sorgt der Digitale Zeilenlängen-Stabilisator (104) der Eingangsdaten-Schnittstelle (1) mittels eines initialisierbaren Komparators und eines Zeilenlängenzählers dafür, daß die zum Datenmultiplexer (5) gehende Anzahl von Digitalwerten pro Datenzeile auch bei externen Störungen der Zeilenstruktur der Datenquelle stets der nominalen Zeilenlänge entspricht. Dies wird durch Auffüllen auf die nominale Zeilenlänge bei zu kurzen Zeilenlängen bzw. durch Abschneiden bei zu langen Zeilenlängen bewerkstelligt. Auf diese Weise wird bewirkt, daß jede beliebige Zeile anhand ihrer Lage (Byte-Nummer) in den Speichereinheiten (6) auch bei gestörten externen Signalen für die Wiedergabe lokalisiert werden kann.

Der Zellenlängen-Stabilisator (104) enthält einen Zeilenwechselpuffer, der es erlaubt, im Burstmode anfallende Daten zu dehnen, sodaß die Datenraten-Anforderungen an die Speichereinheiten (6) in diesen Fällen abgeschwächt werden können und so bei bestimmten Anwendungen Speichereinheiten (6) eingespart werden können.

Im Zeilenlängen-Stabilisator (104) ist eine Synchronisierschaltung integriert, die dafür sorgt, daß nach einem Triggersignal zum Aufzeichnen von externen Signalen am Zeilenanfang bzw. am Bildanfang (bei zweidimensionalen Signalen) begonnen wird. Hierfür werden die entspechenden Steuersignale für den Zeilen- bzw. Bildbeginn der externen Datenquellen ausgewertet.

In der Eingangsdaten-Schnittstelle (1) ist zusätzlich ein Gesamtdatenzähler (106) implementiert, welcher zwei Aufgaben hat:
1) Erfassung der Gesamtmenge der in den Speichereinheiten (6) aufgezeichneten Daten pro Lauf
2) Zuordnung der momentan aufgezeichneten Datenmenge zu einer Uhrzeit, sodaß die gespeicherten Daten auf Wunsch anstatt über eine Byte-Nummer oder Zeilen-Nummer auch über eine einzugebende Zeitangabe gezielt ausgelesen werden können.

Die Gesamtmenge der aufgezeichneten Daten wird benötigt, um die Speichereinheiten (6) bei aufeinanderfolgenden Aufzeichnungs-Intervallen so zu initialisieren, daß keine Nutzdaten in den physikalisch beschriebenen Speichereinheiten (6) unbeabsichtigt verlorengehen. Die Verwaltung der Speichereinheiten (6) wird daher nicht mittels eines Betriebssystems, sondern über das Abzählen der geschriebenen Datenmenge realisiert.

Die momentan aufgezeichnete Datenmenge wird während einer laufenden Aufzeichnung in regelmäßigen Zeitabständen vom Integrierten Personal Computer (7) abgefragt und gespeichert. Aus dem Zusammenhang "Datenmenge über der Zeit" kann dann bei der Wiedergabe gezielt auf die Daten in den Speichereinheiten (6) zugegriffen werden, wenn als Auswahlkriterium die Zeit verwendet werden soll.

Die Eingangsdaten-Schnittstelle beinhaltet außer den genannten Einheiten noch ein Kontrollbus-Interface (108) und einen Taktgenerator (109). Der Taktgenerator (109) versorgt die Analog-Digitalwandler (101), den Zeilenlängen-Stabilisator (104) und die Digitale Formatierungs-Einheit (105) mit den notwendigen digitalen Arbeitstakten. Über das bidirektionale Kontrollbus-Interface (108) kommuniziert der Integrierte Personal Computer (7) mit den entsprechenden Einheiten der Eingangsdaten-Schnittstelle (1) während der Initialisierungsphasen und bei dynamischen Statusabfragen.

Die Speichereinheiten (6) können einzelne Computer-Peripheriegeräte wie z.B. Festplatten, RAM Disks, optische Platten oder Bandlaufwerke sowie Arrays aus diesen Geräten (z.B. mehrere solcher Geräte auf einem SCSI-Bus pro Pfad) sein. In einer häufig benutzten Ausführungsform des erfindungsgemäßen Verfahrens steuert die Speicher-Steuerung (5) SCSI Speichereinheiten an, jedoch ist die Speicher-Steuerung (5) nicht auf diese Schnittstelle beschränkt. Die Anzahl und Art der Speichereinheiten (6) richtet sich nach der zu speichernden Datenmenge und der Datenrate der externen Datenquelle(n). Die Speichereinheiten (6) sind nicht Gegenstand dieses Patents.

Die Speicher-Steuerung (5) hat die Aufgabe, die über den Skalierbaren Datenbus (4) ankommenden Daten in Echtzeit gleichmäßig in Jeweils 16 bit Worten an die angeschlossenen Speichereinheiten (6) zu verteilen, wobei an die Speichereinheit No. 1 die ersten 16 bit der SDB-Wortbreite, an die Speichereinheit No. 2 die zweiten 16 bit der SDB-Wortbreite usw. übergeben werden. Besitzen die Speichereinheiten (6) nur eine 8 bit breite Datenschnittstelle, so teilt die Speicher-Steuerung (5) jedes empfangene 16 bit Wort in zwei sequentielle 8 bit Werte auf. Da die Speicher-Steuerung (5) im Gegensatz zu konventionellen Controllern von Computer-Peripheriegeräten keine Möglichkeit hat, den Datenstrom des SDB's während der Aufnahmezeit zu unterbrechen, muß die Speicher-Steuerung (5) die Inaktivzeiten der Speichereinheiten (6) (z.B. Kommandierungsphasen) durch geeignet dimensionierte Datenpuffer überbrücken.

Zur Maximierung der Schreib/Leseraten der Speichereinheiten (6) verwendet die Speicher-Steuerung (5) im Gegensatz zu konventionellen Controllern von Computer-Peripheriegeräten ausschließlich lineare Adressierung (physikalisches Schreiben und Lesen).

Bei der Wiedergabe der Daten setzt die Speicher-Steuerung (5) die Einzelinformationen der Speichereinheiten (6) zu SDB-Datenworten zusammen. Die mittlere Lesegeschwindigkeit der Speicher-Steuerung (5) kann dabei durch das Wait-Signal des SDB-Busses beeinflußt werden. Dieses Signal wird von der Ausgangsdaten-Schnittstelle (2) erzeugt. Solange das Wait-Signal aktiv ist, unterbricht die Speicher-Steuerung (5) das Lesen von Daten aus den Speichereinheiten (6).

Die Startadresse und die Anzahl der zu schreibenden bzw. zu lesenden Daten wird der Speicher-Steuerung (5) vor einem Aufnahme- bzw. Wiedergabezyklus vom Integrierten Personal Computer (7) über den Kontrollbus mitgeteilt. Während dieser Initialisierungsphase können außerdem spezielle Schreib/Lesemoden kommandiert werden wie z.B.
- automatisches Weiterschreiben am Anfang der Speichereinheiten (6), nachdem beim Schreiben das Ende dieser Speichereinheiten erreicht Ist (Überschreib-Mode)
- zyklisches Auslesen eines bestimmten Speicherbereichs innerhalb der Speichereinheiten (6).

Ist der Anfang einer gesuchten Datenzeile beim Lesen nicht identisch mit dem Anfang von Speicherblöcken in den Speichereinheiten (6), so berechnet die Speicher-Steuerung (5) sowohl die richtige Blocknummer als auch die Anfangsadresse des Zeilenbeginns im Block. Zudem gibt die Speicher-Steuerung(5) in diesem Fall nur Daten ab dem Zeilenbeginn an die Ausgangsdaten-Schnittstelle (2) weiter, wenn auf die Speichereinheiten (6) ausschließlich in ganzen Blöcken zugegriffen werden kann.

Über den Kontrollbus des Integrierten Personal Computers (7) können ebenfalls Daten zur Aufzeichnung in die Speichereinheiten (6) eingespeist werden, wobei die Daten selbst im Integrierten Personal Computer (7) berechnet und offline an die Speicher-Steuerung (5) übertragen werden. Diese Eigenschaft des erfindungsgemäßen Geräts ist besonders für programmierbare Echtzeit-Datengeneratoren von Bedeutung. Alternativ können in diesem Fall die Testdaten auch über den SCSI-Hostadapter (3) von einem externen Host-Rechner in die Speichereinheiten (6) eingegeben werden.

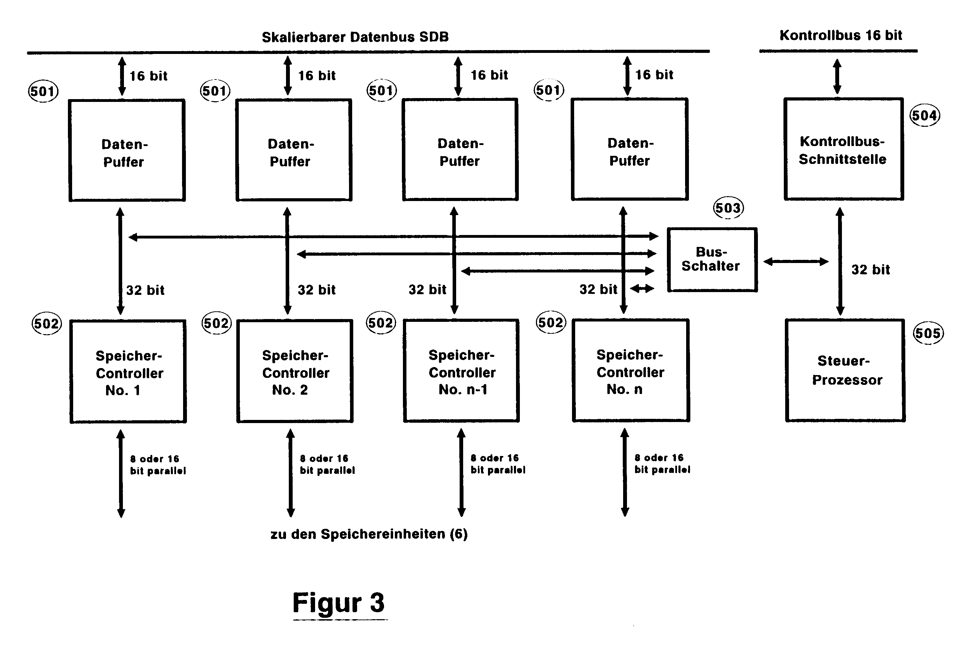

Fig. 3 zeigt ein Blockschaltbild der Speicher-Steuerung (5). Sie besteht aus N identischen Datenpuffern (501) und den zugehörigen Speicher-Controllern (502), wobei für jeweils 16 bit Wortbreite des Skalierbaren Datenbusses (4) ein Zweig von Puffern und Controllern eingesetzt wird.

Alle Speicher-Controller (502) zeichnen sich dadurch aus, daß sie bezüglich der über den SDB (4) kommenden Daten keine Unterbrechungsmöglichkeit haben, sondern ihren Anteil an der Gesamtdatenrate des SDB in Echtzeit an die Speichereinheiten (6) weitergeben müssen. Die Datenpuffer (501) haben ausschließlich die Aufgabe, kurze Kommandierungszeiten, die die Speicher-Controller (502) in den Datenstrom zu den Speichereinheiten (6) einbauen müssen, zu überbrücken. Die Funktion der Datenpuffer (501) ist daher mit einem Cache konventioneller Festplatten-Controller nicht vergleichbar, da dieser beim Schreiben von Daten in eine Festplatte vor allem den CPU-Bus entlasten soll. Dementsprechend ist bei dem erfindungsgemäßen Gerät der Datenpuffer (501) stets wesentlich Kleiner als die in einem Gesamttransfer an die Speichereinheiten (6) übertragene Datenmenge.

Die Speicher-Controller (502) verwenden während einer Aufzeichnungs- bzw. Wiedergabephase ausschließlich lineare (sequentielle physikalische) Adressierung der Speichereinheiten (6). Daher werden dem Steuer-Prozessor (505) der Speicher-Steuerung (5) über den Kontrollbus und die Kontrollbus-Schnittstelle (504) nur Initialisierungsbefehle wie z.B.
- Startadresse für einen Schreib/Lesezyklus
- Länge eines Schreib/Lesezyklus
- Anfang einer Zeile bzw. eines Bilds beim Lesen, falls der Anfang nicht mit einem Blockanfang der Speichereinheiten (6) übereinstimmt
übergeben. Alle weiteren Kommandos an die Speichereinheiten (6) werden danach autonom vom Steuerprozessor (505) ermittelt und ausgegeben. Dies ist im Gegensatz zu einem konventionellen Festplatten-Controller möglich, weil das Schreiben bzw. Lesen der Speichereinheiten (6) beim erfindungsgemäßen Gerät über den gesamten Schreib/Lesezyklus nach einem festen, bekannten Adressierungsschema erfolgt. Der Steuerprozessor (505) wird vorzugsweise als schneller Signalprozessor ausgeführt, um die Dauer der Kommandierungsphasen für die Speichereinheiten (6) so kurz wie möglich zu halten.

Der Busschalter (503) verteilt die Kommandos und eventuelle Daten (siehe unten), die über die Kontrollbus-Schnittstelle (504) an die Speichereinheiten (6) gehen sollen, an die zugehörigen Speicher-Controller (502).

Das Vorhandensein einer Kontrollbus-Schnittstelle (504) zum Integrierten Personal Computer (7) für Initialisierungszwecke kann zusätzlich dafür genutzt werden, daß z.B. Testdaten vom Integrierten Personal Computer (7) in die Speichereinheiten (6) übertragen werden können, wenn das erfindungsgemäße Gerät als Echtzeit-Datengenerator betrieben werden soll.

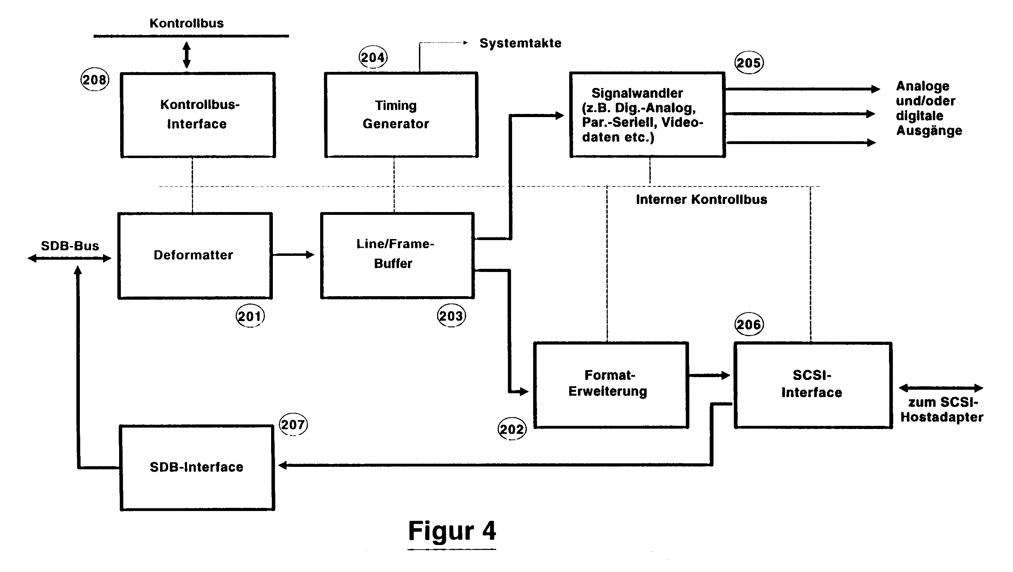

Die Ausgangsdaten-Schnittstelle (2) (siehe Fig. 4) hat zunächst die Aufgabe, die von der Eingangsdaten-Schnittstelle (1) formatierten Daten in Echtzeit wieder in die Originalform der aufgezeichneten Daten zurückzuwandeln. Diese Aufgabe wird von der Deformatter-Einheit (201) und der Signalwandlereinheit (205) realisiert, wobei die Deformatter-Einheit (201) die Daten des Skalierbaren Datenbusses (4) in die ursprünglichen parallelen Digitaldaten des oder der Eingangskanäle zurückwandelt und die Signalwandiereinheit (205) je nach Art der Eingangsdaten eine Digital/Analogwandlung, eine digitale Parallel-Seriellwandlung, eine Regenerierung von ein-bzw. zweidimensionalen Datenstrukturen oder auch nichts durchführt.

Im Falle von ein-bzw. zweidimensionalen Daten wird für die Regenerierung ein Zeilen-bzw. Framebuffer (203) benötigt, der als Wechselpuffer mit der entsprechenden Zeilen-und Framelänge ausgeführt ist. Die aktuell erforderliche Größe des Puffers (203) ist innerhalb der Hardwarebegrenzungen des Puffers softwaremäßig über den Kontrollbus und das Kontrollbus-Interface (208) initialisierbar.

Das für die Ausgangsdaten notwendige Timing wird vom programmierbaren Timing-Generator (204) erzeugt. Die erforderlichen Timingsignale hängen davon ab, ob die aufgezeichneten Eingangsdaten eine null- bzw. ein- bzw. zweidimensionale Struktur haben. Über den Timing-Generator (204) wird auch das Wait-Signal des SDB's (4) generiert, mit dem die Ausgangsdaten-Schnittstelle (2) den Nachschub von Daten aus der Speicher-Steuerung (5) nach Bedarf unterbrechen kann. Dies ist z.B. dann erforderlich, wenn die Ausgangsdaten über die Ausgangsdaten-Schnittstelle (2) und den SCSI-Hostadapter (3) an einen Hostrechner übergeben werden sollen. Das Wait-Signal muß auch dann gesetzt werden, wenn die Ausgangsdaten mit geringerer Geschwindigkeit als Echtzeit erzeugt werden sollen (Zeitlupen-Mode, Einzelbild-Mode).

Die Format-Erweiterung (202) wird optional dann eingesetzt, wenn parallele digitale Daten in ein Hostrechner-kompatibles Format gebracht werden sollen (z.B. Wortlängenerweiterung von 5 bit auf 8 bit bzw. von 12 bit auf 16 bit). Diese Formaterweiterung erfolgt auf dem Weg der Daten vom Deformatter (201) zum SCSI-Interface (206). Diese Funktion kann über den Kontrollbus optional aktiviert werden.

Das SDB-Interface (207) dient dazu, Hostdaten, welche über den Hostadapter (3) in die Speichereinheiten (6) übertragen werden sollen, an den Skalierbaren Datenbus (4) zu bringen. Dieser Weg wird freigeschaltet, wenn der Hostrechner über den externen SCSI-Bus ein entsprechendes Anforderungssignal schickt und in diesem Augenblick keine anderen Aktionen des erfindungsgemäßen Geräts (z.B. Aufzeichnung) laufen.

Das Kontrollbus-Interface (208) wird zur Ankopplung an den Kontrollbus des Integrierten Personal Computers (7) benötigt. Über das Kontrollbus-Interface (208) werden alle Funktionen der Ausgangsdaten-Schnittstelle (2) initialisiert und überwacht.

Der SCSI-Hostadapter (3) ist in der Lage, selbst Master des externen SCSI-Busses zu werden, wenn entweder Daten zum Hostrechner oder zu angeschlossenen Archivierungsgeräten (z. B. Bandgeräten) übertragen werden sollen.

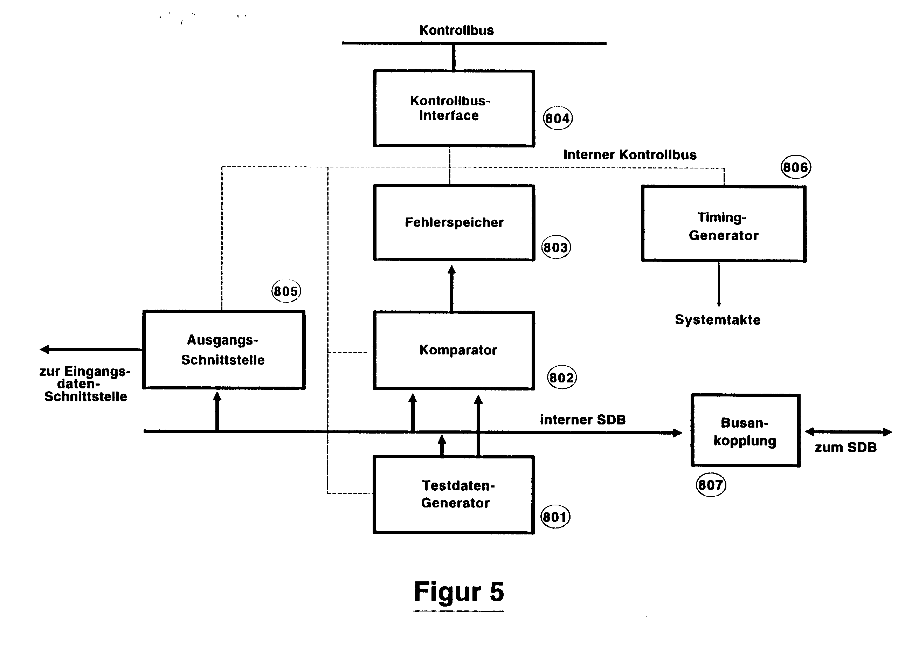

Die Integrierte Testeinheit (8) hat die Aufgabe, die Funktionsbereitschaft des digitalen Teils der Eingangsdaten-Schnittstelle (1), der Speicher-Steuerung (5) und der Speichereinheiten (6) zu testen. Fig. 5 zeigt ein Funktionsbild der Realisierung.

Im Schreibmodus gibt die Integrierte Testeinheit (8) entweder über die Ankopplung zum Skalierbaren Datenbus (4) oder über die Ausgangs-Schnittstelle (805) zur Eingangsdaten-Schnittstelle (1) Testdaten in Echtzeit an die Speichereinheiten (6) aus. Die digitalen Testdaten werden vom Test-Datengenerator (801) erzeugt. Anschließend wird das erfindungsgemäße Gerät so kommandiert, daß die Daten in den Speichereinheiten (6) in Echtzeit ausgelesen werden. Während des Auslesens vergleicht der Komparator (802) jeden Wert auf dem SDB (4) mit dem Sollwert, der vom Testdaten-Generator (801) in der gleichen Weise wie beim vorherigen Schreiben generiert wird. Jeder gefundene Fehler wird im Fehler-Speicher (803) abgelegt, der im Anschluß an den Testlauf vom Integrierten Personal Computer (7) ausgelesen und analysiert wird. Die Lage und Art der Fehler gibt dabei Auskunft über defekte Speichereinheiten (6) bzw. andere Fehlerursachen in den einbezogenen Einheiten.

Der Timing-Generator (806) liefert alle für den Ablauf der Tests notwendigen Echtzeit-Steuersignale.

Der Integrierte Personal Computer (7) ist ein kommerzieller PC auf der Basis von Einsteckkarten. Er hat im erfindungsgemäßen Gerät vor allem administrative Aufgaben, indem er über die lokale Konsole (9) bzw. den Fernsteuerungseingang (10) empfangene Befehle in Initialisierungswerte für die überwachten Einheiten umsetzt und über den Kontrollbus ausgibt. Darüber hinaus überwacht er den Ablauf aller Funktionen im erfindungsgemäßen Gerät. Schließlich bildet der Integrierte Personal Computer (7) die Plattform, über die das Gerät mittels einer geeigneten Bedienoberfläche gesteuert und überwacht werden kann (Software-Bedienoberfläche). Der Integrierte Personal Computer (7) ist nur in Form seiner Gesamtfunktionen als Überwachungs-und Initialisierungseinheit Gegenstand dieses Patents.

Erläuterung der verwendeten Abkürzungen:
- AD: Analog-Digital (Wandler)
- CPU: Central Processing Unit
- DMA: Direct Memory Access
- GAL: Gate Array Logic
- HDDR: High Density Digital Recorder
- IEEE: Schnittstellenbezeichnung für eine Parallelschnittstelle
- PC: Personal Computer
- RAM: Random Access Memory
- RS 232C: Schnittstellenbezeichnung für eine serielle Schnittstelle
- SCSI: Small Computer Systems Interface
- SDB: Skalierbarer Datenbus

## Patentansprüche

1. Verfahren zur Speicherung und Wiedergabe von analogen und digitalen externen Signalen mittels Parallelisierung von Standard-Computerperipheriegeräten (hier Speichereinheiten (6) genannt),
dadurch gekennzeichnet, daß
- bei der Aufzeichnung die externen Signale über eine Eingangsdaten-Schnittstelle (1), einen Skalierbaren Datenbus (4) und eine Speichersteuerung (5) direkt an die parallelisierten Speichereinheiten (6) zur Speicherung übergeben werden, und
- die Datenbusbreite des Skalierbaren Datenbusses (4), die Speichersteuerung (5) und die Anzahl der parallelisierten Speichereinheiten (6) so ausgelegt ist, daß die externen Signale ohne Unterbrechungsmöglichkeit des externen Datenstroms in Echtzeit an die Speichereinheiten (6) übergeben werden können, und
- für die Aufzeichnung der externen Signale in den Speichereinheiten (6) ausschließlich lineare (sequentielle physikalische) Adressierung benutzt wird, und die Verwaltung der in den Speichereinheiten (6) abgelegten Daten über einen Datenmengenzähler in der Eingangsdaten-Schnittstelle (1) erfolgt, dessen Werte im Integrierten Personal Computer (7) registriert und gespeichert werden, und
- bei der Wiedergabe der gespeicherten externen Signale die Daten der parallelisierten Speichereinheiten (6) über die Speichersteuerung (5), den Skalierbaren Datenbus (4) und die Ausgangsdaten-Schnittstelle (2) in der ursprünglichen Form oder in einem anderen Format entweder in Echtzeit (mit der gleichen Datenrate wie aufgezeichnet) oder langsamer oder schneller dem Benutzer wieder zur Verfügung gestellt werden. Die verlangte Lesegeschwindigkeit wird dabei über ein 'Wait'-Signal generiert, das die Ausgangsdaten-Schnittstelle (2) an die Speichersteuerung (5) schickt, wenn die Speichersteuerung (5) mehr Daten pro Zeiteinheit liefert als zur Erzeugung der verlangten Ausgangsdatenrate notwendig sind, und
- die in den Speichereinheiten (6) aufgezeichneten Daten alternativ über die Speichersteuerung (5), den Skalier-baren Datenbus (4), die Ausgangsdaten-Schnittstelle (2) und den SCSI-Hostadapter (3) mit der jeweils maximal möglichen Geschwindigkeit der extern angeschlossenen SCSI-Geräte an einen externen Host-Rechner oder an externe SCSI-Archivierungsgeräte wie z.B. digitale Bandaufzeichnungsgeräte oder magneto-optische Platten digital übertragen werden können, und
- ein Integrierter Personal Computer (7) über einen internen Kontrollbus die Initialisierung, Steuerung und Überwachnung aller anderen Einheiten (1)-(8), jedoch ohne die Speichereinheiten (6), vornimmt, ohne daß der Integrierte Personal Computer (7) dabei selbst an der Aufzeichnung oder Wiedergabe der externen Signale beteiligt ist. Alle Funktionen des erfindungs-gemäßen Verfahrens werden entweder über eine lokale Konsole (9) oder über eine Fernsteuer-Schnittstelle (10) (z.B. RS 232C oder IEEE) des Integrierten Personal Computers (7) kommandiert und überwacht, und
- eine Integrierte Testeinheit (8) digitale Testdaten in Echtzeit oder langsamer entweder an die Eingangsdaten-Schnittstelle (1) oder an den Skalierbaren Datenbus (4) abgeben kann, mit welchen die korrekte Funktion aller anderen Einheiten des erfindungsgemäßen Verfahrens überprüft werden kann. Hierzu kann z.B. die Integrierte Testeinheit (8) Testdaten an den Skalierbaren Datenbus (4) liefern, die dann in den Speichereinheiten (6) gespeichert werden. Anschließend werden die Speichereinheiten (6) in Echtzeit ausgelesen, wobei die Integrierte Testeinheit (8) die auf dem Skalierbaren Datenbus (4) ankommenden Daten mit dem Sollmuster vergleicht. Alle festgestellten Abweichungen werden in einem lokalen Speicher der Integrierten Testeinheit (8) zwischengespeichert und anschließend über den internen Kontrollbus zur Auswertung an den Integrierten Personal Computer (7) übergeben.
Zum Testen der Ausgangsdaten-Schnittstelle (2) und des SCSI-Hostadapters (3) liefert die Integrierte Testeinheit (8) die notwendigen Testdaten über den Skalierbaren Datenbus (4). Die Beurteilung der Richtigkeit der Daten am Echtzeitausgang bzw. am externen SCSI-Bus erfolgt durch den Benutzer des erfindungsgemäßen Verfahrens.
Das Testen der korrekten Funktion der Integrierten Testeinheit (8) selbst geschieht durch eine Übertragung seiner Ausgangsdaten über den internen Kontrollbus an den Integrierten Personal Computer (7), welcher die empfangenen Daten auf Richtigkeit prüft, und
- der Aufbau des erfindungsgemäßen Verfahrens modular ist, sodaß am Eingang und Ausgang für die externen Signale verschiedenartige Signalarten und Signalanzahlen durch einfachen Austausch von Schnittstellen-Karten verarbeitet werden können. Ebenso kann das erfindungsgemäße Verfahren durch Erweiterung des parallelen Skalierbaren Datenbusses (4) in Schritten von 16 bit Datenbreiten, durch Erweiterung der Speichersteuerung (5) und durch Anpassung der Anzahl und Speicherkapazität der Speichereinheiten (6) bezüglich der zu speichernden Datenmengen und der geforderten Echtzeitdatenraten an die Bedürfnisse der Anwendungen modular angepaßt werden.

2. Verfahren nach Anspruch 1 zur Realisierung der Eingangsdaten-Schnittstelle (1),
dadurch gekennzeichnet daß
- bei analogen Eingangssignalen Analog-Digital-Wandler (101) bzw. bei digital seriellen Eingangssignalen Seriell-Parallelwandler (102) die Eingangssignale in digital parallele Form wandeln, die zusammen mit den bereits in digital paralleler Form vorliegenden Eingangssignalen einer Digitalen Triggerschwellen-Schaltung (103) zugeführt werden, und
- eine Digitale Triggerschwellen-Schaltung (103) in einem selektierbaren Signalkanal alle Daten nur dann zum nachfolgenden Zeilenlängen-Stabilisator (104) durch-läßt, wenn eine wählbare Bitkombination in den Daten des selektierten Kanals auftritt. Alternativ kann beim Auftreten des gewählten Triggerworts eine vorher gestartete Datenaufzeichnung beendet werden. Die Triggerschwellen-Schaltung (103) wird nur dann eingesetzt, wenn eine entsprechende Funktion in der jeweiligen Anwendung gebraucht wird, und
- ein Digitaler Zeilenlängen-Stabilisator und Puffer (104) bei ein- oder zweidimensionalen Signalen die Zeilenlänge durch Abschneiden zu langer Zeilen bzw. durch Auffüllen zu kurzer Zeilen auf dem vorab initialisierten Sollwert hält. Der Zeilenlängen-Puffer verändert bei der Ausgabe der Daten die Ausgangstaktfrequenz in der Weise, daß stoßweise anfallende Daten auf das maximal zur Verfügung stehende Zeitinterval gedehnt werden, und
- ein Digitaler Formattierer (105) die ihm vom Zeilenlängen-Stabilisator (104) angebotenen digitalen, parallelen Daten zusammen mit Steuerbits und eventuell nötigen Füllbits in das vom Skalierbaren Datenbus (4) verlangte digitale, parallele Format wandelt, und
- ein Bustreiber (107) die Ausgangsdaten der Eingangsdaten-Schnittstelle (1) auf den Skalierbaren Datenbus (4) legt, und
- ein Gesamtmengenzahler (106) die Zähl der Werte, welche vom digitalen Formattierer (105) beim Aufzeichnen externer Signale auf den Skalierbaren Datenbus (4) gelegt werden, mitzählt und nach Beendigung der Aufzeichnung seinen Zählerstand über das Kontrollbus-Interface (108) an den Integrierten Personal Computer (7) übergibt, und
- ein Taktgenerator (109) alle für den Betrieb der Eingangsdaten-Schnittstelle (1) erforderlichen Systemtakte erzeugt.

3. Verfahren nach Anspruch 1 zur Realisierung der Datenübertragung zwischen der Eingangsdaten-Schnittstelle (1), der Speichersteuerung (5) und der Ausgangsdaten-Schnittstelle (2),
dadurch gekennzeichnet, daß
- ein paralleler, bidirektionaler, synchroner, reiner Datenbus (4) mit in Schritten von 16 bit skalierbarer digitaler Datenbus-Breite, einer Taktleitung, einem Wait-Signal von der Ausgangsdaten-Schnittstelle (2) zur Speichersteuerung (5) und Steuersignalen zur Kennzeichnung gültiger Daten auf dem SDB-Bus (4) verwendet wird. Bei der Übertragung der externen Signale von der Eingangsdaten-Schnittstelle (1) zur Speicher-Steuerung (5) gibt es kein Bussignal, mit welchem der Datentransfer zeitweise gestoppt werden könnte.

4. Verfahren nach Anspruch 1 zur Realisierung der Speichersteuerung (5),
dadurch gekennzeichnet, daß
- jeweils 16 bit Datenbreite des Skalierbaren Datenbusses (4) einem identischen Datnpuffer (501) und einem identischen Speicher-Controller (502) zugeordnet sind, über welche die bidirektionale Datenübertragung zwischen Eingangsdaten-Schnittstelle (1) und Speichereinheiten (6) bei der Aufzeichnung bzw. zwischen Speichereinheiten (6) und der Ausgangsdaten-Schnittstelle (2) bei der Wiedergabe der externen Signale bewerkstelligt wird, und
- die Speicher-Controller (502) sowohl mit den Datenpuffern (501) als auch über den Busschalter (503) und die Kontrollbus-Schnittstelle (504) mit dem Integrierten Personal Computer (7) Daten austauschen können, und
- die Speicher-Controller (502) über den wahlweise 8 bit oder 16 bit breiten Datenbus zu den Speichereinheiten (6) diese Speichereinheiten (6) ausschließlich linear (sequentiell physikalisch) adressieren, wobei andere als die hier genannten Datenbusse zu den Speichereinheiten (6) ebenfalls möglich sind, und
- ein Steuer-Prozessor (505) nach einer Initialisierung durch den Integrierten Personal Computer (7) über die Kontrollbus-Schnittstelle (504) eine autonome Steuerung aller Datenpuffer (501) und Speicher-Controller (502) während der Aufnahme bzw. der Wiedergabe der externen Signale über den Busschalter (503) durchführt. Hierzu sind Kommando-Sequenzen vom Steuer-Prozessor (505) in den laufenden Datenstrom von und zu den Speichereinheiten (6) einzubauen.
Für den Fall der Datenübertragung zwischen dem Integrierten Personal Computer (7) und den Speichereinheiten (6) über die Kontrollbus-Schnittstelle (504) unter Nicht-Echtzeitbedingungen führt der Steuer-Prozessor (505) auch die Steuerung dieser Datentransfers durch.

5. Verfahren nach Anspruch 1 zur Realisierung der Ausgangsdaten-Schnittstelle (2),
dadurch gekennzeichnet, daß
- die über den Skalierbaren Datenbus (4) empfangenen Daten in einem Deformatter (201) durch Umkehr der Funktion des Digitalen Formattierers (105) wieder in die ursprünglichen digitalen, parallelen Daten zurückgewandelt werden, wobei eventuelle Füllbits entfernt und die im Datenstrom enthaltenen Steuerbits für die Zuordnung der Daten zu den richtigen Ausgangskanälen verwendet werden, und
- je nach Datenstruktur (null-ein-oder zweidimensional) ein Line- oder Framebuffer (203) die vom Deformatter (201) empfangenen Daten zwischenspeichert und mit der richtigen zeitlichen Form an die Signalwandler-Einheit (205) bzw. an die optionale Formaterweiterung (202) weitergibt, und
- eine Signalwandler-Einheit (205) die vom Line-bzw. Frame Buffer (203) empfangenen Daten durch z.B. Digital/-Analog-Wandler, Digitale Parallel/Seriell-Wandler, Videoformat-Wandler u.ä. in das ursprüngliche Format der aufgezeichneten externen Signale zurücktransferiert bzw. in ein neues Format wandelt, in dem die ursprünglichen externen Eingangssignale nicht vorlagen, und
- eine Formaterweiterung (202) bei der Ausgabe der gespeicherten digitalen Signale zu einem externen Host-Rechner oder externen Archivierungsgeräten über den externen SCSI-Bus auf Wunsch computer-kompatible Wortlängen erzeugt, falls die externen Signale, welche in den Speichereinheiten (6) gespeichert wurden, ein solches Format nicht aufweisen (z.B. Formaterweiterungen von 12 bit auf 16 bit reelle Signale oder von 5 bit Real- und Imaginärteil auf 8 bit Real-und Imaginärteil für komplexe Signale), und
- ein SCSI-Interface (206) die von der Formaterweiterung (202) empfangenen digitalen Daten für die Verarbeitung im SCSI-Hostadapter (3) aufbereitet bzw. die über den Host-Adapter (3) vom externen SCSI-Bus empfangenen digitalen Daten über das SDB-Interface (207) und den SDB-Bus (4) zur Speichersteuerung (5) und den Speichereinheiten (6) weiterleitet, und
- ein Timing-Generator (204) alle für den Betrieb der Ausgangsdaten-Schnittstelle (2) notwendigen Systemtakte und das Wait-Signal für den SDB-Bus (4) er-zeugt, und
- über ein Kontrollbus-Interface (208) vom Integrierten Personal Computer (7) die Initialisierung und Überwachung der Ausgangsdaten-Schnittstelle (2) vor bzw. während des Betriebs vorgenommen wird.

6. Verfahren nach Anspruch 1 zur Realisierung der Integrierten Testeinheit (8),
dadurch gekennzeichnet, daß
- ein Testdaten-Generator (801) in Echtzeit digitale Testmuster erzeugt, die während der Sendephase eines Testlaufs zum SDB-Bus (4) bzw. während der Vergleichsphase eines Testlaufs auf korrekte empfangene Daten zum Komparator (802) geleitet werden, und
- ein Komparator (802) einen digitalen Vergleich in Echtzeit zwischen den vom SDB-Bus (4) empfangenen Daten und den vom Testdaten-Generator (801) gelieferten Daten durchführt und alle Abweichungen (Fehler) in einem Fehlerspeicher (803) abgelegt werden, und
- der Fehlerspeicher (803) nach dem Ende eines Testlaufs über das Kontrollbus-Interface (804) vom Integrierten Personal Computer (7) ausgelesen und zur Identifizierung der Lage von Fehlern analysiert wird, und
- eine zusätzliche Ausgangs-Schnittstelle (805) digitale Testdaten in Echtzeit zur Eingangsdaten-Schnittstelle (1) liefert, womit eine Einbeziehung aller digitalen Teile der Eingangsdaten-Schnittstelle (1) in das Testkonzept möglich ist, und
- ein Kontrollbus-Interface (804) vermittels des Integrierten Personal Computers (7) die Initialisierung und Statusüberwachung der Integrierten Testeinheit (8) zuläßt, und darüber hinaus die digitalen Testdaten des Testdaten-Generators (801) in Nicht-Echtzeit über das Kontrollbus-Interface (804) zum Selbsttest des Testdaten-Generators (801) an den Integrierten Personal Computer (7) übertragen werden können, und
- ein Timing-Generator (806) alle zum Betrieb der Integrierten Testeinheit (8) notwendigen Systemtakte erzeugt.
